Europäisches Patentamt

European Patent Office

Office européen des brevets

(11) Veröffentlichungsnummer: **0 470 588 A2**

# EUROPÄISCHE PATENTANMELDUNG

(21) Anmeldenummer: **91113247.0**

(51) Int. Cl.5: **H04N 9/31**

(22) Anmeldetag: **07.08.91**

(30) Priorität: **08.08.90 DE 4025136**
**04.07.91 EP 91111087**

(43) Veröffentlichungstag der Anmeldung:
**12.02.92 Patentblatt 92/07**

(84) Benannte Vertragsstaaten:
**AT CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**W-8510 Fürth/Bay.(DE)**

(72) Erfinder: **Köchel, Matthias Grundig E.M.V.**
**E.M.V. Max Grundig**
**holländ. Stiftung & Co. KG**
**Kurgartenstrasse 37 W 8510 Fürth(DE)**

(74) Vertreter: **Dreykorn-Lindner, Werner, Dipl.-Ing.**
**GRUNDIG E.M.V. Elektro-Mechanische**
**Versuchsanstalt Max Grundig**
**holländ.Stiftung & Co. KG Lizenz- und**
**Patentabteilung Kurgartenstrasse 37**
**W-8510 Fürth/Bayern(DE)**

(54) **Projektionsgerät für die Grossbildprojektion.**

(57) Es sind Projektionsgeräte für die Großbildprojektion bekannt, welche nach dem Prinzip der Modulation des polarisierten Lichtes arbeiten. Bei Lichtventilen zur Bildmodulation des durchtretenden polarisierten Lichtes besteht der notwendige Polarisator meist aus einer Polarisationsfolie, wodurch nur maximal 50 % des eintreffenden Lichtes ausgenutzt werden können.

Als Ersatz für diese Polarisationsfolie wird erfindungsgemäß ein Interferenz-Polarisator eingesetzt, der eine nahezu verlustfreie Polarisation des einfallenden Lichtes ermöglicht. Durch die besondere Gestaltung des Interferenz-Polarisators werden die notwendigen Volumina der Bausteine des Interferenz-Polarisators, und auch benachbarter Elemente, wie Spiegel, Kondensor und IR-UV-Absorberfilter minimiert.

Durch besondere Ausgestaltung mit IR- und UV-transmittierendem Spiegel wird ein Großteil der Wärmestrahlung bereits am Interferenz-Polarisator ausgefiltert.

Fig. 1

EP 0 470 588 A2

Die Erfindung betrifft ein Projektionsgerät für die Großbildprojektion nach dem Oberbegriff des Anspruchs 1.

Es wird von einem Stand der Technik ausgegangen, wie er z. B. in der EP-A2-0 258 927 dargelegt ist. Darin ist ein Projektionsgerät beschrieben, welches mittels bekannter Elemente, wie Lichtteiler-Platten, Lichtmodulatoren (Lichtventilen), Spiegel, Objektive usw. die Projektion bewegter oder stehender Bilder auf eine Projektionswand ermöglicht. Die Variation der Lichttransmission der erwähnten Lichtventile wird dadurch erreicht, daß das zu modulierende Licht von einem ersten Polarisator linear polarisiert wird, dann die Polarisationsebene des Lichtes aufgrund der doppelbrechenden Eigenschaften des Materials des Lichtventils, je nach angelegter Steuerspannung, um einen bestimmten Winkel gedreht wird und schließlich von einem zweiten Polarisator (Analysator) nur der Anteil des in seiner Polarisationsebene gedrehten, linear polarisierten Lichtes transmittiert wird, dessen Polarisationsrichtung parallel zur bevorzugten Polarisationsrichtung des zweiten Polarisators liegt. Die Darstellung eines Bildes wird dadurch erreicht, daß das Lichtventil aus einer Vielzahl von matrixartig angeordneten Bildelementen besteht. Nach diesem bekannten Prinzip arbeiten z.B. Twisted-Nematic (TN) Flüssigkristallzellen, von Flüssigkristall-Bildschirmen, welche beispielsweise in der Zeitschrift "Elektronik", Heft 21, 1986, auf Seiten 113-118 beschrieben sind.

Im allgemeinen werden für die erwähnten Polarisatoren gereckte Kunststoff-Folien z. B. aus Polyvinylalkohol verwendet, die allerdings den Nachteil haben, daß nur eine Polarisationsebene des Lichtes verwendet wird, somit systembedingt maximal nur 50 % des einfallenden Lichtes ausgenutzt wird. Zusätzlich treten weitere Verluste durch Lichtabsorption in der Folie auf, so daß nur ca. 35 - 40 % des einfallenden Lichtes ausgenutzt wird.

Zur besseren Ausnutzung des von der Lampe erzeugten Lichtes werden z.B. in der EP-A2-0 258 927 und auch in der DE-A1- 38 29 598 Interferenz-Polarisatoren vorgeschlagen, die beide Polarisationsrichtungen des Lichtes ausnutzen.

Erreicht wird dies durch:
- interferierende Polarisationsteilerschichten, die eine praktisch verlustlose Aufspaltung des Lichtstrahls in zwei Strahlen vornehmen. Der eine Strahl weist eine Schwingungsebene des elektrischen Feldvektors E auf, die parallel zur Einfallsebene liegt (p-Komponente) und der andere Strahl weist eine Schwingungsebene auf, die senkrecht zur Einfallsebene liegt (s-Komponente);
- Verzögerungselemente, die eine Drehung der Schwingungsebene eines Strahles vornehmen, so daß nach Durchgang durch die Verzögerungselemente die beiden Schwingungsebenen der Strahlen parallel zueinander liegen;
- und optische Mittel zur Zusammenführung der beiden Strahlen zu einem Strahl mit einheitlicher Schwingungsebene, d. h. einheitlicher Polarisationsrichtung.

Die Interferenz-Polarisatoren der vorgeschlagenen Art haben jedoch mindestens einen der folgenden Nachteile:
- großes Volumen, dadurch schwer und teuer,
- ungleiche Wege der Strahlengänge,
- Strahlengänge relativ lang, damit Verluste bei divergierendem Strahl,
- ungünstige Anordnung, was einem kompakten Aufbau bei Verwendung von transmissiven Lichtventilen hinderlich ist.

Aufgabe der Erfindung ist es, die Vorzüge eines Interferenz-Polarisators zur Realisierung eines Projektions-Gerätes für die Großbildprojektion zu nutzen, die geschilderten Nachteile jedoch zu vermeiden.

Diese Aufgabe wird durch die im Anspruch 1 gekennzeichneten Merkmale gelöst. Die Unteransprüche zeigen weitere vorteilhafte Ausführungen auf.

Einzelne Merkmale eines Interferenz-Polarisators gemäß der deutschen Patentanmeldung P 40 25 136, deren Priorität für diese Anmeldung beansprucht ist, sind an sich aus der, bezogen auf die P 40 25 136, nicht vorveröffentlichten, europäischen Anmeldung EP-A2-0 422 661 bekannt.

Der erfindungsgemäße Interferenz-Polarisator besteht in seinem Grundaufbau aus zwei 90°-Prismen verschiedener Größen. Auf die Grundfläche des kleineren Prismas oder auf die erste Schenkelfläche des größeren Prismas wird eine Interferenzschicht aufgebracht. Diese beiden Flächen werden anschließend miteinander verkittet. Die erste Schenkelfläche des kleineren Prismas, die senkrecht zur Grundfläche des größeren Prismas steht, bildet die Lichteintrittsöffnung, die Grundfläche des größeren Prismas die Lichtaustrittsöffnung. Auf die zweite Schenkelfläche des kleineren Prismas wird eine Viertelwellenlängen-Platte aufgebracht. Die Außenseite dieser Viertelwellenlängen-Platte wird verspiegelt.

Der erfindungsgemäße Interferenz-Polarisator arbeitet nach folgendem Prinzip:
Der senkrecht zur Eintrittsöffnung einfallende Lichtstrahl wird von den polarisierenden Schichten in zwei Strahlen aufgeteilt, wobei ein erster Strahl, dessen Schwingungsebene senkrecht zur Zeichenebene liegt (s-Komponente), reflektiert wird. Dieser reflektierte Strahl wird durch zweimaligem Durchgang durch die Viertelwellenlängen-Platte und Spiegelung in seiner Polarisationsrichtung um 90° gedreht und trifft nun wieder als p-Komponente auf die Interferenzschicht, die er durchdringt und danach den Polarisator verläßt, wobei die Ausbreitungsrichtung des Strahls nun senkrecht zur ursprünglichen Strahlrichtung des Lichtes liegt. Ein zweiter Strahl, dessen Schwingungsebene parallel zur Zeichenebene liegt (p-Komponente), wird von den interferierenden Schichten transmittiert und anschließend in seiner Ausbreitungsrichtung so umgelenkt, daß sich beide Strahlen in gleicher Richtung ausbreiten oder die Ausbreitungsrichtungen der Strahlen konvergieren.

Eine Anordnung dieser beschriebenen Art bietet folgende Vorteile:

1. Die Längen des ersten und zweiten Strahls sind gleich groß. Dieser Vorteil wird deutlich, wenn man berücksichtigt, daß reale Lampen, wie z. B. Metall-Halogen-Lampen, keine punktförmige Lichtemission aufweisen, sondern die Emission, vereinfacht ausgedrückt, in einem rotationssymmetrischem Volumen einer Länge von 5-10 mm und einem Radius von 1-3 mm stattfindet. Somit ist es mit optischen Mitteln nicht möglich, einen perfekt parallelen Strahl zu erreichen. Tatsächlich wird der Strahl eine Tendenz zum Divergieren aufweisen. Bei divergierendem Strahl nimmt der auf die Fläche bezogene Lichtstrom, die Beleuchtungsstärke, mit zunehmendem Abstand ab. Bei unterschiedlichen Strahllängen im Polarisator würden die beiden Strahlen beim Verlassen des Polarisators unterschiedliche Beleuchtungsstärken aufweisen.

Dieses Problem wurde erfindungsgemäß durch optisch gleich lange Wege des ersten und zweiten Strahls gelöst.

2. Durch die gefaltete Struktur der Strahlengänge kann das Volumen des Polarisators insgesamt klein und die Länge der Strahlen kurz gehalten werden.

3. Durch die Reflexion an Spiegelschichten ist es prinzipiell möglich, wellenlängenselektive Spiegel zu verwenden, die sichtbares Licht reflektieren und UV- und IR-Anteile passieren lassen. Somit können auf einfache Weise die nicht gewünschten Strahlungskomponenten des Lichtes aus dem optisch aktiven Teil des Gesamtgeräts ausgekoppelt werden. Die Wirkung von IR- bzw. UV-hemmenden Elementen, die auf Absorption beruhen und somit selbst zu einer störenden Wärmequelle im Gerät werden, kann damit reduziert werden bzw. es kann ganz auf sie verzichtet werden.

4. Durch die Ablenkung der beiden parallel zueinander linear polarisierten Strahlen im Verhältnis zum einfallenden Strahl um 90° kann der Aufbau des gesamten Gerätes mit verringertem Volumen als bei einer linearen Anordnung erfolgen.

5. Ein weiterer Vorteil der Anordnung wird deutlich, wenn man die physikalische Natur der polarisierenden Interferenzschichten genauer untersucht. Eine Abhandlung hierzu findet man z.B. bei H. Schröder, Optik 13, Heft 4, 1956, Seiten 158-168. Hieraus und aus der experimentellen Erfahrung wird deutlich, daß das Extinktions-Verhältnis, d.h. das Verhältnis der gewünschten polarisierten Komponente zur unerwünschten Komponente beim transmittierten Strahl höher ist als beim reflektierten Strahl. Zudem liegt hier eine geringe Wellenlängen- und Winkelabhängigkeit des Extinktions-Verhältnisses vor. Da der Kontrast des letztlich erzeugten projizierten Bildes nie besser sein kann als das Extinktions-Verhältnis des Lichtes, wenn es die Lichtventile erreicht, wird man versuchen, nur mit den Komponenten zu arbeiten, die vor Verlassen des Polarisators eine Interferenzschicht transmittiert haben.

Die erfindungsgemäße Anordnung halbiert die Fläche der polarisierenden Interferenzschichten dadurch, daß die von den Interferenzschichten reflektierte Komponente mit geringem Extinktionsverhältnis nach Reflektion und Drehung der Polarisierungsrichtung an praktisch gleicher Position nochmals auf die Interferenzschicht trifft, durch sie transmittiert wird und so ihr Extinktionsverhältnis verbessert wird.

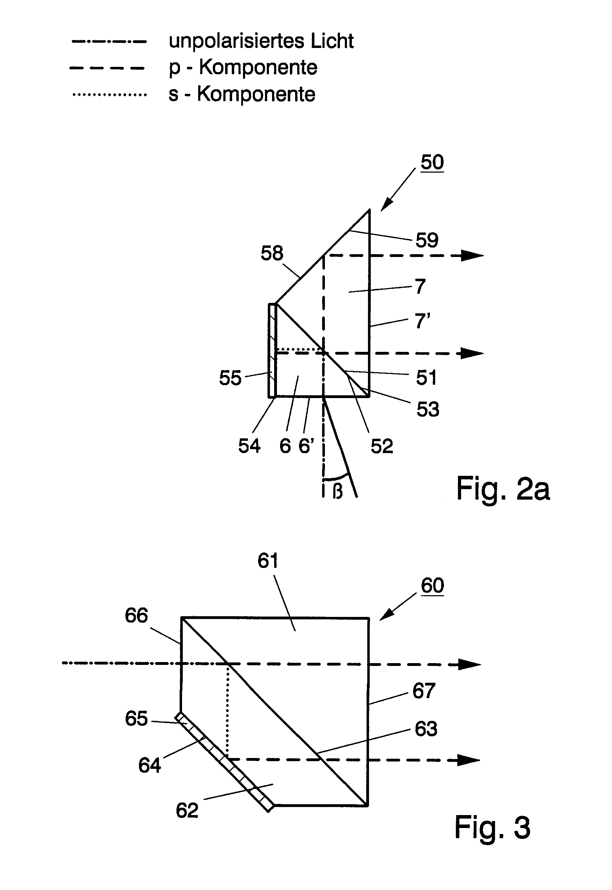

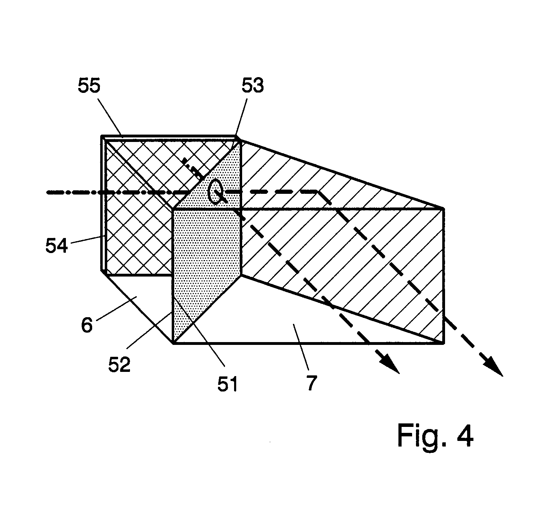

Der hier beschriebene Aufbau eines Interferenz-Polarisators besitzt gegenüber einem eingangs beschriebenen bekannten Interferenz-Polarisator ein wesentlich geringeres Volumen, wie ein Vergleich der Figuren 2a und 3 zeigt. Demgemäß sind auch die Längen der Strahlengänge reduziert, die Wege der Strahlengänge sind gleich lang. Die nichtlineare Anordnung von eintretendem zu austretendem Licht ermöglicht eine kompaktere Bauweise des Projektionsgerätes gegenüber einer linearen Anordnung.

Die Erfindung wird nachstehend anhand der Zeichnungen näher erläutert. Es zeigt:

Fig. 1 den Aufbau eines Projektionsgerätes in Draufsicht,

Fig. 2a bis 2d einen erfindungsgemäßen Interferenz-Polarisator,

Fig. 3 einen Interferenz-Polarisator nach dem Stand der Technik,

Fig. 4 den Interferenz-Polarisator nach Fig. 2a in perspektivischer Darstellung,

Fig. 5 den Aufbau eines Projektionsgerätes unter Verwendung einer anderen Ausführungsart eines Interferenz-Polarisators,

Fig. 6 die Draufsicht auf den in Fig. 5 verwendeten Interferenz-Polarisator,

| Fig. 7 | eine Ausführungsart des Interferenz-Polarisators nach Fig. 6, jedoch mit um 90° gedrehter Lichteintrittsöffnung, |
| Fig. 8 | den Interferenz-Polarisator nach Fig. 6, jedoch ohne 90°-Prisma am Lichteintritt, dafür mit IR- und UV-transmittierendem Spiegel und |
| Fig. 9 | den Lichtstrom und das Extinktions-Verhältnis des Strahls beim Verlassen des Polarisators in Abhängigkeit vom Einfallswinkel. |

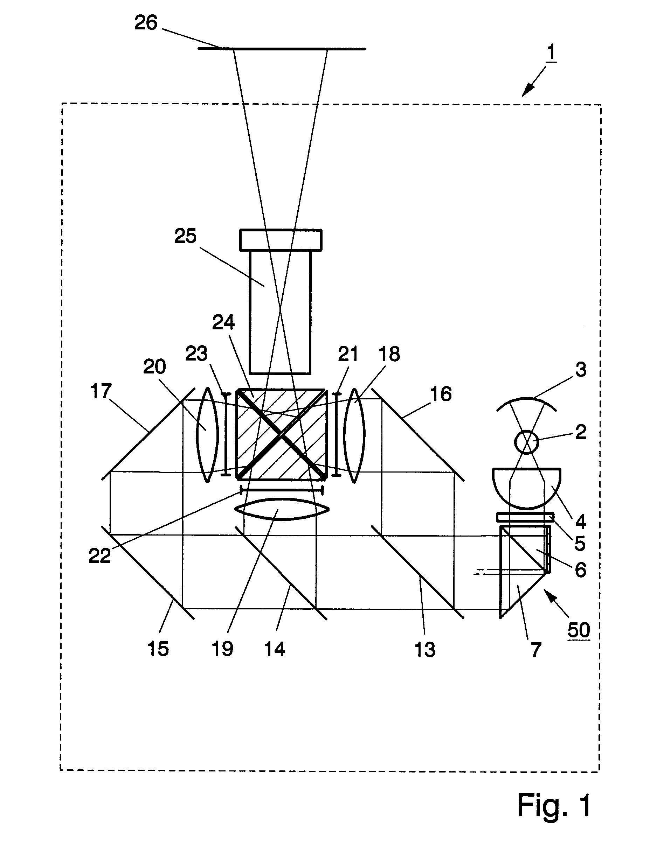

In Fig. 1 ist der prinzipielle Aufbau eines Projektionsgerätes unter Verwendung des erfindungsgemäßen Interferenz-Polarisators dargestellt. Das Licht einer Lichtquelle 2 wird über einen Reflektor 3, einen Kondensor 4 und einen IR- und UV-Absorberfilter 5 dem Interferenz-Polarisator 50 zugeführt, in dem es entsprechend der Arbeitsweise des Interferenz-Polarisators polarisiert, reflektiert, zum Teil in seiner Polarisationsrichtung um 90° gedreht und linear polarisiert den nachfolgenden dichroitischen Farbteilern 13, 14, 15 zugeleitet wird. An diesen wird das polarisierte Licht in die Farbauszüge Rot, Blau und Grün zerlegt und über Spiegel 16, 17 und den Linsen 18, 19, 20 den Lichtventilen 21, 22, 23 zugeführt. Dort wird für jeden Farbauszug eine Intensitätsmodulation entsprechend den darzustellenden Bildern durchgeführt, indem durch die doppelbrechenden Eigenschaften des Materials des Lichtventils die Polarisationsebene des linear polarisierten Lichtes gedreht und vom folgenden Analysator nur der Anteil transmittiert wird, dessen Polarisationsrichtung parallel zur bevorzugten Polarisationsrichtung des Analysators liegt. Dadurch werden in der nachfolgenden optischen Einrichtung 24 die Lichtbündel mit Hilfe dichroitischer Spiegelschichten wieder zu einem gesamten Lichtbündel zusammengeführt und das entstandene Farbbild über die Projektions-Optik 25 auf eine Projektionsfläche 26 projiziert.

Die Fig. 2a stellt die Draufsicht auf den erfindungsgemäßen Interferenz-Polarisator, wie er in Fig. 1 eingesetzt ist, dar.

Das unpolarisierte Licht tritt in die Lichteintrittsöffnung 6' des kleineren 90°-Prismas 6 ein. Die parallel zur Zeichenebene schwingende Komponente (p-Komponente) durchdringt die zwischen den beiden Prismenflächen 51, 52 liegende Interferenzschicht 53 und wird an der Schenkelfläche 59 des größeren 90°-Prismas 7 um 90° umgelenkt, worauf es aus der von der Grundfläche des größeren 90°-Prismas 7 gebildeten Lichtaustrittsöffnung 7' den Interferenz-Polarisator verläßt.

Die senkrecht zur Zeichenebene schwingende Komponente (s-Komponente) des eintretenden Lichtes wird an der Interferenzschicht 53 um 90° umgelenkt und der Viertelwellenlängen-Platte 54 zugeleitet, wobei ihre Polarisationsebene nach zweimaligem Durchgang durch die Viertelwellenlänge-Platte 54, deren Reflektionsschicht so ausgelegt sein kann, daß sie sichtbares Licht reflektiert und IR- und UV-Anteile transmittiert, und Reflektion an der verspiegelten Außenfläche um 90° gedreht wird. Die nach dieser Drehung nun parallel zur Zeichenebene schwingende Komponente wird von der Interferenzschicht transmittiert und ebenso der Lichtaustrittsöffnung 7' zugeführt.

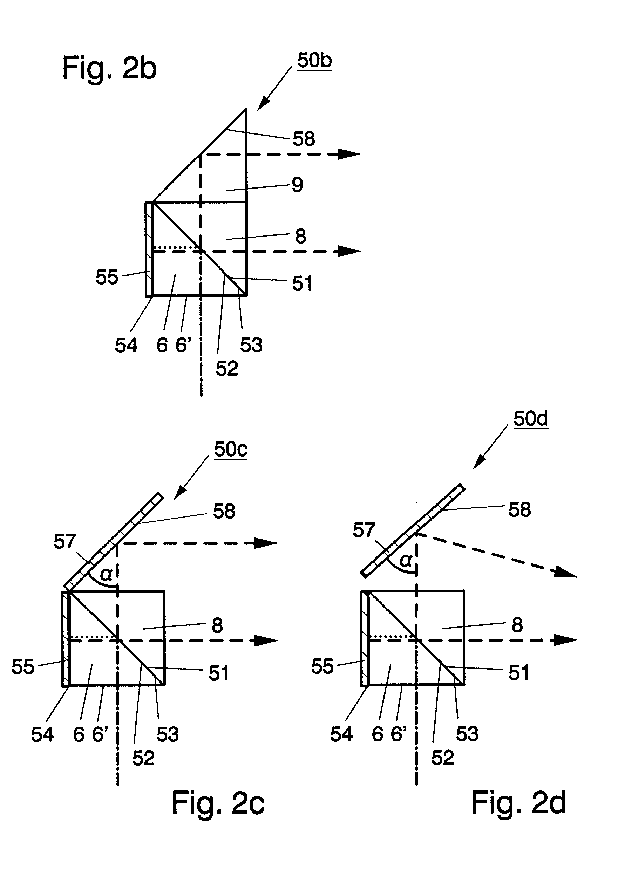

Fig. 2b zeigt eine ähnliche Anordnung wie Fig. 2a, bei der jedoch das Prisma 7 in zwei miteinander verkittete 90°-Prismen 8 und 9 aufgeteilt wird, die jeweils so groß wie das 90°-Prisma 6 sind. Die beiden Prismen 6 und 8, deren Grundflächen die Interferenzschicht umschließen, bilden einen Würfel.

Fig. 2c zeigt eine ähnliche Anordnung wie Fig. 2b, jedoch ohne das 90°-Prisma 9. Zur Reflektion der p-Komponente des einfallenden Lichtstrahls ist ein Oberflächenspiegel 57 unter einem Winkel α zur Hauptrichtung des einfallenden Lichtstrahls angebracht. Das Maß des Winkels α beträgt vorzugsweise 45°, er kann aber auch andere Winkelgrößen annehmen, wie in Fig. 2d dargestellt ist. Dieser Oberflächenspiegel kann so ausgelegt sein, daß er sichtbares Licht reflektiert und IR- und UV-Anteile transmittiert.

Die Fig. 3 zeigt maßstabsgetreu einen Interferenz-Polarisator 60 nach dem Stand der Technik, wie er in der DE-A1- 38 29 598 dargelegt ist, im Vergleich zu dem erfindungsgemäßen Interferenz-Polarisator 50 nach Fig. 2a. Bei dem Interferenz-Polarisator 60 nach Fig. 3, der aus einem Dove-Prisma 62, einem 90°-Prisma 61, dazwischenliegender Interferenzschicht 63 und einer Viertelwellenlängen-Platte 64, sowie einer Verspiegelung 65 auf der Deckfläche des Dove-Prismas 62 besteht, ist die Größe der Lichteintrittsöffnung 66 identisch mit der Größe der Lichteintrittsöffnung 6' des Interferenz-Polarisators 50 in Fig. 2a. Ebenfalls identisch sind die Größen der Lichtaustrittsöffnungen 67, 7' der beiden Interferenz-Polarisatoren. Der erfindungsgemäße Interferenz-Polarisator 50 ist also, trotz gleicher Lichtein- und Lichtaustrittsöffnungen, wie beim Interferenz-Polarisator 60 nach dem Stand der Technik mit wesentlich kleinerem Volumen realisiert.

In Fig. 4 ist zur Verdeutlichung der Strahlengänge des einfallenden und des zerlegten Lichtes der erfindungsgemäße Interferenz-Polarisator nach Fig. 2a in perspektivischer Darstellung abgebildet.

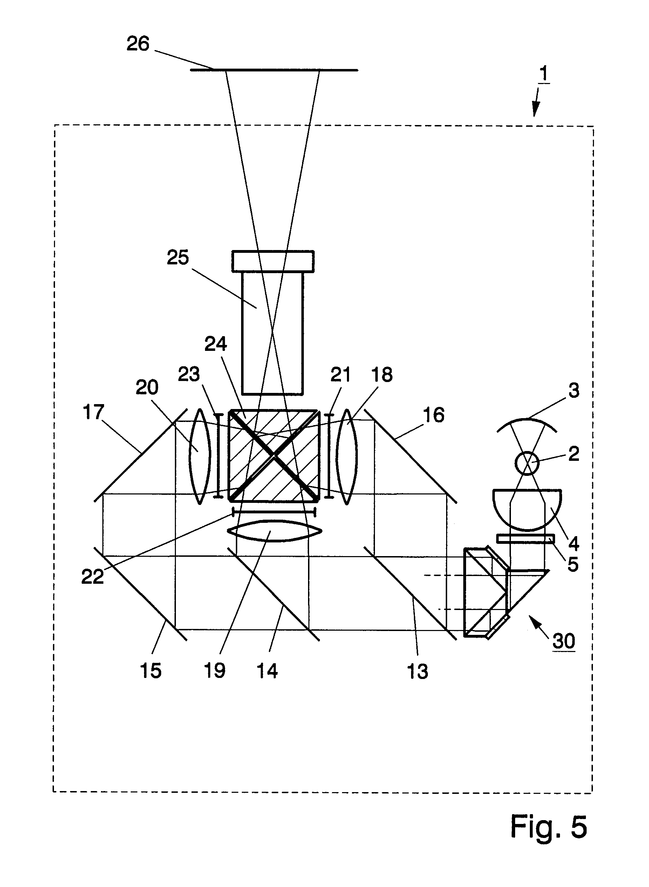

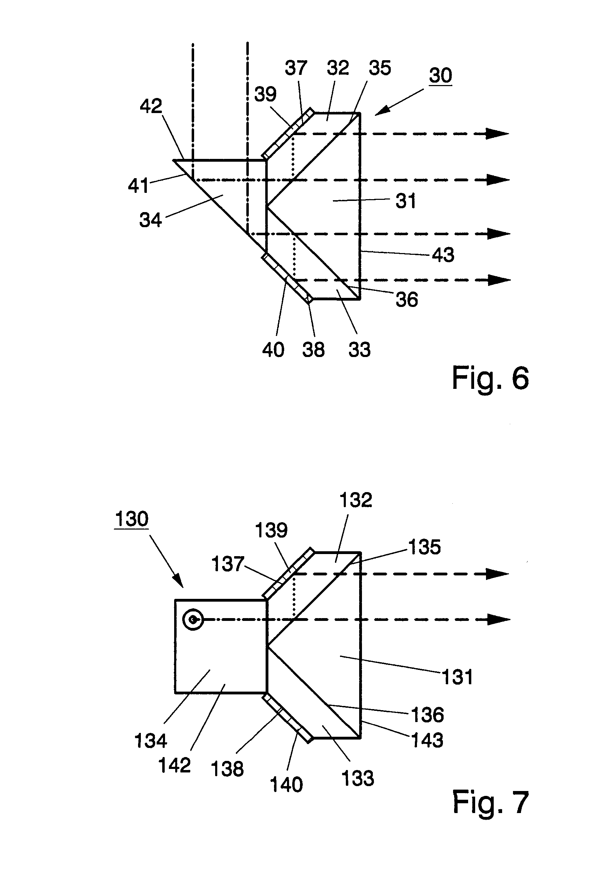

In Fig. 5 ist eine Ausführung eines Projektionsgerätes dargestellt, die, in Lichteintrittsrichtung gesehen, nach dem Interferenz-Polarisator 30 der Ausführung nach Fig. 1 entspricht. Der in dieser Ausführungsform eingesetzte Interferenz-Polarisator 30 ist in Fig. 6 dargestellt und wird anhand dieser Darstellung näher erläutert.

Der Interferenz-Polarisator 30 besteht aus einem größeren 90°-Prisma 31, zwei Dove-Prismen 32, 33, sowie einem kleineren 90°-Prisma 34. Zwischen den Grundflächen der beiden Dove-Prismen 32, 33 und den Schenkelflächen des 90°-Prismas 31 befinden sich die Interferenzschichten 35, 36. Die Deckflächen der beiden Dove-Prismen 32, 33 tragen je eine Viertelwellenlängen-Platte 37, 38, die an ihrer Außenfläche 39, 40 vorzugsweise verspiegelt sind. Das in die erste Schenkelfläche des 90°-Prismas 34 eintretende Licht wird an der Grundfläche 41 des 90°-Prismas 34 um 90° umgelenkt und tritt in die beiden Dove-Prismen ein, in denen die p-Komponente die Interferenzschichten 35, 36 durchdringt, die s-Komponente reflektiert, an den Viertelwellenlängen-Platten 37, 38 nach zweimaligem Durchgang in seiner Polarisationsrichtung um 90° gedreht, reflektiert und als p-Komponente der Lichtaustrittsöffnung 43 zugeführt wird.

Fig. 7 stellt eine modifizierte Ausführungsart 130 der in Fig. 6 gezeigten Ausführung dar. Dabei ist das kleinere 90°-Prisma 134 gegenüber der Ausführung 34 in Fig. 6 um 90° gedreht. Diese Ausführungsart bringt ggfs. räumliche Vorteile bei einem bestimmten Aufbau eines Projektionsgerätes.

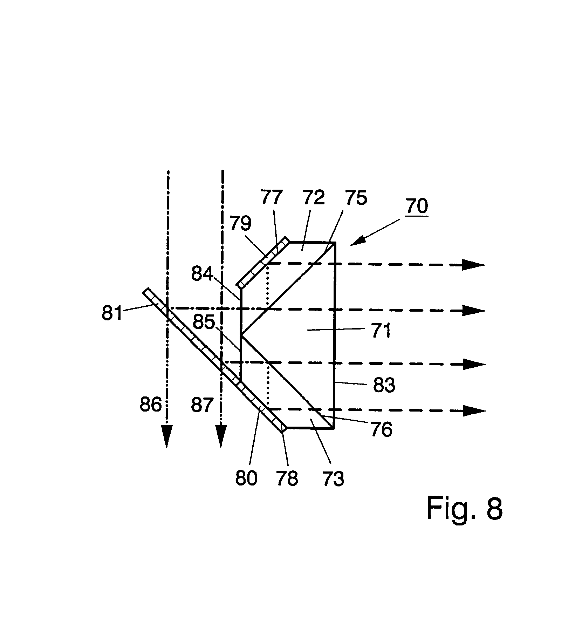

In Fig. 8 ist eine modifizierte Ausführungsart eines Interferenz-Polarisators nach Fig. 6 dargestellt. Das Lichteintrittsprisma 34 aus Fig. 6 entfällt. Dafür befindet sich in der Verlängerung der Deckfläche des Dove-Prismas 73 ein IR- und UV-transmittierender Spiegel 81. Dieser IR- und UV-transmittierende Spiegel 81 erfüllt zwei Aufgaben. Zum einen wird der sichtbare Anteil des eintretenden Lichtes reflektiert und in die beiden Dove-Prismen 72, 73 zur weiteren Behandlung weitergeleitet, zum anderen wird der IR- und UV-Anteil des eintretenden Lichtes durch den Spiegel 81 transmittiert und verläßt bereits hier das optische System, von wo aus es in geeigneter Weise an die Außenluft des Projektionsgerätes abgegeben werden kann. Eine unnötige und unwillkommene Erwärmung des Interferenz-Polarisators und der nachfolgenden Projektionsgeräte-Elemente wird dadurch vermieden.

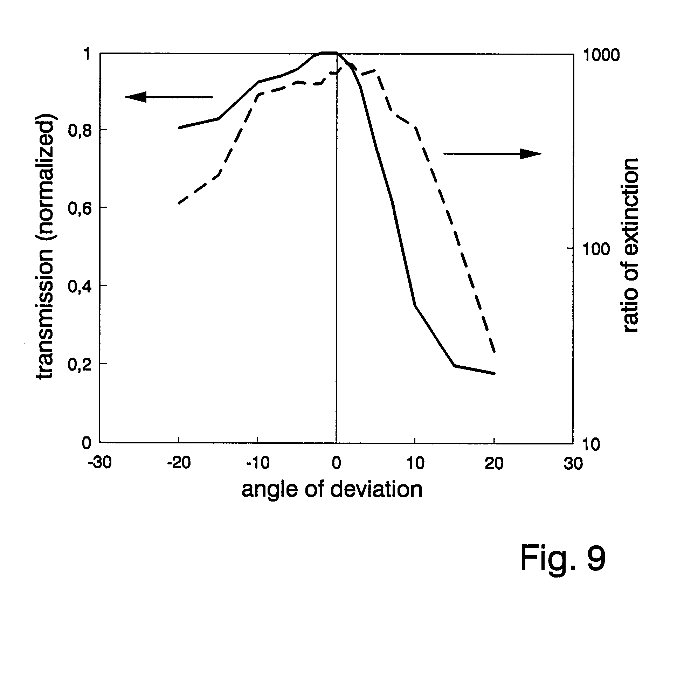

Fig. 9 zeigt gemessene Werte für Transmission (durchgezogene Linie) und Extinktion (gestrichelte Linie) des Polarisators in Abhängigkeit vom Einfallswinkel $\beta$ (Fig. 2a) des Strahls zur senkrechten zur Lichteintrittsfläche in der Zeichenebene. In der Grafik negativ dargestellte Winkel führen zu einem Winkel vom Strahl zur Interferenzfläche von <45°, positiv dargestellte führen zu einem Winkel vom Strahl zur Interferenzfläche von > als 45°. Aus dieser Grafik wird deutlich, daß der einfallende Lichtstrahl möglichst senkrecht zur Lichteintrittsfläche 6' einfallen sollte.

Die weitere Verarbeitung des aus dem Interferenz-Polarisator austretenden polarisierten Lichtes über Farbteilerplatten, Lichtventile und der optischen Einrichtung zum übereinanderprojizieren des in den Lichtventilen behandelten Lichtes usw., sowie die Anordnung von Lampe, Hohlspiegel und Kondensor, ist in den Fig. 1 und 5 an nur einem Ausführungsbeispiel dargestellt. Es ist selbstverständlich eine Weiterverarbeitung nach anderen zum Stand der Technik gehörenden Methoden, wie sie beispielsweise in Camcorder 1990, JEI, part. XIV, oder in den EP-A2-0 287 034, EP-A2-0 331 326 und EP-A2-0 192 023 beschrieben sind, möglich.

## Patentansprüche

1. Projektionsgerät (1) für die Großbild-Projektion, bestehend aus,

   - einer Lichtquelle (2),

   - Mitteln (13, 14, 15) zur Zerlegung des Lichtes in Primärfarben und

   - Elementen zum Polarisieren, Modulieren, Zusammenführen und Projizieren des bildmodulierten Lichtes auf eine Projektionsfläche (26)

   **dadurch gekennzeichnet,** daß

   - der Interferenz-Polarisator (50) aus zwei gleich großen oder zwei unterschiedlich großen 90°-Prismen (6, 8 oder 6, 7) besteht,

   - im Falle unterschiedlich großer 90°-Prismen die Größe der Grundfläche (52) des kleineren Prismas (6) der Größe der Schenkelfläche (51) des größeren Prismas (7) entspricht und beide Flächen sich gegenüberstehen,

   - im Falle der zwei gleich großen 90°-Prismen sich die beiden Grundflächen (51, 52) gegenüberstehen, wodurch ein Würfel entsteht,

   und daß in beiden Fällen

- sich eine Interferenzschicht (53) zwischen den Flächen (51, 52) befindet,

- eine Viertelwellenlängen-Platte (54) an einer Schenkelfläche des Prismas (6) vorgesehen ist, welche an ihrer Außenseite eine Verspiegelung (55) besitzt,

- eine Reflektionsfläche (58) zur 90°-Ablenkung der p-Komponente des einfallenden Lichts vorhanden ist und

- die Lichteintrittsfläche (6') sowie die Lichtaustrittsfläche (7') vergütet sind.

2. Projektionsgerät nach Anspruch 1,
   **dadurch gekennzeichnet,** daß
   die zweite Schenkelfläche des 90°-Prismas (7) die Reflektionsfläche (58) bildet.

3. Projektionsgerät nach Anspruch 1,
   **dadurch gekennzeichnet,** daß
   die Reflektionsfläche (58) durch die Grundfläche eines 90°-Prismas (9) oder durch einen Oberflächenspiegel (57) gebildet wird, welcher mit der Richtung des einfallenden Lichtes einen Winkel $\alpha$ bildet.

4. Projektionsgerät nach Anspruch 3,
   **dadurch gekennzeichnet,** daß
   der Winkel $\alpha$ größer oder gleich oder kleiner 45° ist und für den Fall größer die Kante des Oberflächenspiegels (57) zu dem aus den Prismen (6, 8) bestehenden Würfel beabstandet ist.

5. Projektionsgerät nach einem oder mehreren der Ansprüche 1 bis 3,
   **dadurch gekennzeichnet,** daß
   innerhalb des Interferenz-Polarisators (50) die Länge des Strahlenganges des parallel zur Einfallsebene schwingenden Lichtanteils gleich ist der Länge des Strahlenganges des reflektierten, senkrecht zur Einfallsebene schwingenden und nach zweimaliger Transmission durch die Viertelwellenlängen-Platte (54) in seiner Polarisationsebene um 90° gedrehten Lichtanteils.

6. Projektionsgerät nach einem oder mehreren der Ansprüche 1 bis 3,
   **dadurch gekennzeichnet,** daß
   die Lichteintrittsrichtung in den Interferenz-Polarisator (50) rechtwinklig zur Lichtaustrittsrichtung, jedoch in der oder außerhalb der allgemeinen Strahlenebene des Projektionsgerätes (1) liegt.

7. Projektionsgerät (1) nach dem Oberbegriff des Anspruchs 1,
   **gekennzeichnet durch**
   einen Interferenz-Polarisator (30) bestehend aus

   - einem ersten 90°-Prisma (31),

   - zwei Dove-Prismen (32, 33), deren Deckflächen mit je einer Viertelwellenlängen-Platte (37, 38) versehen sind, an deren Außenseiten eine Verspiegelung (39, 40) vorhanden ist, und deren Grundflächen-Größen den Schenkelflächen-Größen des 90°-Prismas (31) entsprechen und zwischen den Grundflächen der Dove-Prismen (32, 33) und den Schenkelflächen des 90°-Prismas (31) sich je eine Interferenz-Schicht (35, 36) befindet,

   - einem zweiten 90°-Prisma (34), dessen Schenkelflächen-Größe der Summe der Größe zweier Schenkelflächen der Dove-Prismen (32, 33) entspricht,

   und dessen Lichteintrittsöffnung (42, 142, 84, 85) und Lichtaustrittsöffnung (43, 143, 83) vergütet sind.

8. Projektionsgerät nach Anspruch 7,
   **dadurch gekennzeichnet,** daß
   das 90°-Prisma (34, 134) entfällt und stattdessen ein Oberflächen-Spiegel (81) vorhanden ist, der das sichtbare Licht in die Dove-Prismen (32, 33, 132, 133) reflektiert und die IR- und UV-Anteile transmittiert.

9. Projektionsgerät nach den Ansprüchen 1, 7 oder 8,
   **dadurch gekennzeichnet,** daß
   der Interferenz-Polarisator (50, 30, 130, 70) zwischen der Beleuchtungseinheit, bestehend aus Lampe (2), Hohlspiegel (3), Kondensor (4) und IR-UV-Absorptionsfilter (5), oder einer aus ähnlichen Elementen bestehenden Beleuchtungseinheit und den Farbteiler-Platten (13, 14, 15) angeordnet ist und/oder daß die optischen Komponenten der Beleuchtungseinheit, wie z.B. Hohlspiegel (3), Kondensor (4) und Absorptionsfilter (5) kleiner dimensioniert sind, als bei Anwendung ohne den Interferenz-Polarisator.

10. Projektionsgerät nach den Ansprüchen 1, 7 oder 8,

    **dadurch gekennzeichnet,** daß die Symmetrieachse der Beleuchtungseinheit, letztere bestehend aus z.B. Hohlspiegel (3), Kondensor (4) und Absorbtionsfilter (5) nicht senkrecht zur Lichteintrittsfläche (6', 42, 142) des Interferenz-Polarisators (30, 50, 130) liegt oder daß die Symmetrieachse der Beleuchtungseinheit nicht in den Mittelpunkt der Lichteintrittsfläche (6', 42, 142) trifft und/oder daß die Lichtquelle aus mehreren Lichtquellen besteht, deren spektrale Emissions-Charakteristika im wesentlichen den Primärfarben entsprechen, und daß im Projektionsgerät (1) keine Farbteilerplatten zur spektralen Trennung des Lichtes verwendet werden.

Fig. 1

—··—··—  unpolarisiertes Licht
— — — —  p - Komponente
···········  s - Komponente

Fig. 2a

Fig. 3

## Fig. 2b

50b

58

9

8

55

51

54  6  6'    53

52

50c

58

57

α

8

55

51

54  6  6'    53

52

## Fig. 2c

50d

58

57

α

8

55

51

54  6  6'    53

52

## Fig. 2d

Fig. 4

Fig. 5

Fig. 6

Fig. 7

Fig. 8

Fig. 9